# EUROPEAN PATENT APPLICATION

(11) **EP 4 273 979 A1**
(43) Date of publication of application: **08.11.2023**
(21) Application number: 22862834.3
(22) Date of filing: 24.06.2022
(51) Int. Cl.: H01M 10/04

(54) **BATTERY CELL MANUFACTURING APPARATUS AND METHOD THEREFOR**

(30) Priority: 02.09.2021 CN 202111027515
(71) Applicant: Contemporary Amperex Technology Co., Limited, Ningde, Fujian 352100 (CN)
(72) Inventor: ZHANG, Xiaowei, Ningde, Fujian 352100 (CN); WEN, Yuqian, Ningde, Fujian 352100 (CN); TANG, Minghao, Ningde, Fujian 352100 (CN); ZHANG, Shengwu, Ningde, Fujian 352100 (CN); ZHANG, Wei, Ningde, Fujian 352100 (CN)
(74) Representative: Ziebig Hengelhaupt Intellectual Property Attorneys Patentanwaltskanzlei PartGmbB
(86) International application number: PCT/CN2022/101338
(87) International publication number: WO 2023/029693

(57) **Abstract**

The present application relates to a battery cell manufacturing device and method. The battery cell comprises an electrode sheet and a separator. The electrode sheet has a free end in its own extension direction. The battery cell manufacturing device includes a winding pin and a lamination assembly. The winding pin is configured to wind the electrode sheet and separator into a battery cell. The lamination assembly is disposed upstream of the winding pin, and configured to connect the free end of the electrode sheet to the separator. The battery cell manufacturing device and method provided in the embodiments of the present application solve the problem that the free end of the electrode sheet is prone to shift relative to the separator during the battery cell production process, thus ensuring the safety of the battery cell produced.

## Description

### Cross-Reference to Related Applications

The present application claims the priority of Chinese Patent Application No. 202111027515.7 filed on September 2, 2021, entitled "Battery cell manufacturing device and method", the disclosure of which is incorporated herein by reference in its entirety.

### Technical Field

The present application relates to the technical field of batteries, and in particular, to a battery cell manufacturing device and method.

### Background Art

In the production process of batteries, it is necessary to use a battery cell manufacturing device to wind the electrode sheets and separator into a battery cell, and the battery cell has a flat structure after winding and pre-pressing. However, during the winding process to form a wound battery cell, the free end of the electrode sheet is prone to shift relative to the separator, which affects the safety of the battery cell.

### Summary of the Invention

Embodiments of the present application provide a battery cell manufacturing device and method, to solve the problem that the free end of the electrode sheet is prone to shift relative to the separator during the battery cell production process, thus ensuring the safety of the battery cell produced.

In a first aspect, the present application provides a battery cell manufacturing device. The battery cell includes an electrode sheet and a separator. The electrode sheet has a free end in its own extension direction. The battery cell manufacturing device includes a winding pin and a lamination assembly. The winding pin is configured to wind the electrode sheet and separator into a battery cell. The lamination assembly is disposed upstream of the winding pin, and configured to connect the free end of the electrode sheet to the separator.

In the technical solution of the embodiment of the present application, the lamination assembly is arranged upstream of the winding pin, and the free end of the electrode sheet is connected to the separator by the lamination assembly, so as to avoid the shift of the free end of the electrode sheet relative to the separator during the winding process of the electrode sheet and the separator of the battery cell, and ensure the safety of the battery cell produced.

In some embodiments, the lamination assembly includes an adhesive applying assembly, configured to apply an adhesive to the free end of the electrode sheet and the separator, so that the free end of the electrode sheet is adhesively connected to the separator. By including an adhesive applying assembly in the lamination assembly, the free end of the electrode sheet can be made by the adhesive applying assembly to be adhesively connected, to meet the requirement of fixation at relative positions of the free end and the separator, and avoid the shift of the free end relative to the separator.

In some embodiments, the adhesive applying assembly includes a supporting mechanism and an adhesive applying mechanism arranged oppositely. The supporting mechanism is configured to be arranged on the side of the separator facing away from the electrode sheet, and to support the free end and the separator during adhesive application, and the adhesive applying mechanism is configured to be arranged on the side of the separator facing the electrode sheet, and to provide an adhesive tape to the free end and the separator, so as to adhesively connect the free end and the separator through the adhesive tape. By including a supporting mechanism and an adhesive applying mechanism in the adhesive applying assembly, when the free end is intended to be connected to the separator, the side of the separator facing away from the electrode sheet is supported by the supporting mechanism, and the free end is adhesively connected to the separator by the adhesive tape provided by the adhesive applying mechanism, to meet the requirement of the fixation at relative positions of the free end and the separator, and avoid the shift of the free end relative to the separator.

In some embodiments, the distance between the supporting mechanism and the adhesive applying mechanism is adjustable. Through the above arrangement, the distance between the supporting mechanism and the adhesive applying mechanism can be adjusted according to the winding state of the separator and the electrode sheet. When the free end of the electrode sheet needs to be connected to the separator, the distance between the supporting mechanism and the adhesive applying mechanism can be adjusted and reduced, such that the supporting mechanism is brought into contact with the separator, and the adhesive applying mechanism is brough into contact with the separator and the free end of the electrode sheet to meet the requirement of connection between the free end and the separator. When the free end is connected to the separator, the distance between the supporting mechanism and the adhesive applying mechanism is adjusted and increased to avoid the contact between the supporting mechanism and the separator and avoid the contact between the adhesive applying mechanism and the electrode sheet. This ensures that during the process of winding the separator and the electrode sheet by the winding pin, the resistance caused by the supporting mechanism and the adhesive applying mechanism to the movement of the electrode sheet and the separator can be avoided.

In some embodiments, the adhesive applying mechanism includes a first driving portion and an adhesive preparation roller rotatably connected to the first driving portion. The first driving portion is configured to drive the adhesive preparation roller to move close to or away from the separator and the free end. The adhesive preparation roller is configured to provide a mounting position for the adhesive tape, and be driven by the first driving portion to adhesively connect the adhesive tape to the free end and the separator. Through the above arrangement, the first driving portion can drive the adhesive preparation roller to move close to or away from the separator and the electrode sheet, so that the distance between the supporting mechanism and the adhesive applying mechanism is adjustable. The adhesive preparation roller has a mounting position for mounting the adhesive tape, and the adhesive tape can be mounted at the mounting position. The adhesive preparation roller is rotatably connected to the first driving portion, so that after one end of the adhesive tape is bonded to the electrode sheet, the adhesive tape is continuously attached to the free end of the electrode sheet and the separator with the rotation of the adhesive preparation roller relative to the first driving portion. This meets the requirement of attaching a predetermined length of adhesive tape to the free end and the separator to ensure the connection strength between the free end and the separator.

In some embodiments, the adhesive preparation roller includes a roller body and a partition component arranged in the roller body. The partition component divides the inner cavity of the roller body into two or more independent chambers, and the roller body is provided with a communicating hole corresponding to each independent chamber, for vacuum suction of the adhesive tape. The above arrangement facilitates the mounting of the adhesive tape. By control of the vacuum level, the pressure in the independent chamber is adjusted to control the suction and release of the adhesive tape, so as to meet the requirement of connection of the free end of the electrode sheet and the separator by the adhesive tape.

In some embodiments, the supporting mechanism includes a second driving portion and a supporting roller rotatably connected to the second driving portion. The second driving portion is configured to drive the supporting roller to move close to or away from the separator, and the supporting roller is configured to provide support to the surface on the side of the separator facing away from the electrode sheet. Through the above arrangement, the second driving portion can drive the supporting roller to move in a direction close to or away from the separator, so that the distance between the supporting mechanism and the adhesive applying mechanism is adjustable. Moreover, when the separator is supported by the supporting roller, the separator runs constantly during the winding by the winding pin. By rotatably connecting the supporting roller and the second driving portion, when the separator is supported by the supporting roller the friction between them is rolling friction, thus reducing the friction between the supporting roller and the separator.

In some embodiments, the first driving portion includes a first telescopic cylinder having a cylinder rod rotatably connected to the adhesive preparation roller. Through the above arrangement, the first driving portion can meet the driving requirements of the adhesive preparation roller, and the structure of the first driving portion is simple and the cost is low.

In some embodiments, the second driving portion includes a second telescopic cylinder having a cylinder rod rotatably connected to the supporting roller. Through the above arrangement, the second driving portion can meet the driving requirements of the supporting roller, and the structure of the second driving portion is simple and the cost is low.

In some embodiments, the first driving portion includes a first driving motor, a first lead screw, a first nut and a first guide portion. The first lead screw is connected to an output end of the first driving motor, the first lead screw is in transmission fit with the first nut, the first nut is in guide fit with the first guide portion, and the first nut is rotatably connected to the adhesive preparation roller. Through the above arrangement, the first lead screw can be driven to rotate by the first driving motor. Since the first lead screw is in transmission fit with the first nut, and the first nut is in guide fit with the first guide portion, the rotation of the first lead screw can be converted into the reciprocating movement of the first nut along the length direction of the first lead screw, whereby the first nut can drive the adhesive preparation roller to reciprocate.

In some embodiments, the second driving portion includes a second driving motor, a second lead screw, a second nut and a second guide portion. The second lead screw is connected to an output end of the second driving motor, the second lead screw is in transmission fit with the second nut, the second nut is in guide fit with the second guide portion, and the second nut is rotatably connected to the supporting roller. Through the above arrangement, the second lead screw can be driven to rotate by the second driving motor. Since the second lead screw is in transmission fit with the second nut, and the second nut is in guide fit with the second guide portion, the rotation of the second lead screw can be converted into the reciprocating movement of the second nut along the length direction of the second lead screw, whereby the second nut can drive the supporting roller to reciprocate.

In some embodiments, the lamination assembly includes an infrared heating lamination component configured to heat at least one of the free end and the separator, such that the free end is thermally laminated with the separator. Through the above arrangement, the lamination assembly can provide thermal energy to the free end of the electrode sheet and the separator through the infrared heating lamination component, to change the physical properties of the free end of the electrode sheet and the separator, so that the two are thermally laminated to meet the requirement of connection.

In some embodiments, the lamination assembly includes a pressing component configured to compress the free end and the separator such that the free end is in press fit with the separator. Through the above arrangement, the lamination assembly can provide an external force to the free end of the electrode sheet and the separator through the pressing component, to change the physical properties of the free end of the electrode sheet and the separator, and meet the requirement of connection of the two.

In some embodiments, the battery cell manufacturing device further includes a flattening component, which is located downstream of the lamination assembly and upstream of the winding pin, and configured to flatten the connecting region between the free end and the separator. Through the above arrangement, the flattening component can be used to press and flatten the connecting region between the free end of the electrode sheet and the separator, so as to ensure the connection strength between the two.

In some embodiments, the flattening component includes a third driving portion and a flattening roller connected to each other. The flattening roller is configured to roll the connecting region between the free end and the separator, and the third driving portion is configured to drive the flattening roller to move in a direction close to or away from the separator and the free end. Through the above arrangement, the flattening roller can be driven by the third driving portion to move in a direction close to or away from the separator and the free end as desired, so as to meet the requirement of flattening connecting region by the flattening roller. After the connecting region is flattened, the flattening roller can be driven by the third driving portion to move in a direction away from the separator and the free end, so as to prevent the flattening roller from interfering with the movement of the electrode sheet and the separator.

In some embodiments, the battery cell manufacturing device further includes a shift correction component disposed upstream of the lamination assembly, and configured to adjust the relative position of the free end and the separator. By arranging the shift correction component located upstream of the lamination assembly, the position of the free end can be adjusted before the lamination assembly connects the free end to the separator, so as to prevent the free end from being connected and fixed to the separator in the event of shift.

In some embodiments, the free end includes a head end and/or a tail end of the electrode sheet. Through the above arrangement, the head end and/or tail end of the electrode sheet can be connected to the separator, thereby avoiding poor alignment of the head end and the tail end of the electrode sheet, and improving the safety performance of the formed battery cell.

In a second aspect, the present application provides a battery cell manufacturing method, where the battery cell includes a separator and an electrode sheet having a free end. The method includes:
Winding the separator;
Stacking the electrode sheet and the separator;
Connecting the free end of the electrode sheet to the separator; and
Continuing to wind the separator and electrode sheet.

In the technical solution of the embodiment of the present application, in the process of manufacturing the battery cell, the free end of the electrode sheet is connected to the separator, so that the free end of the electrode sheet can be prevented from shift relative to the separator during the process of winding the electrode sheet and the separator intended to be wound into a battery cell, to ensure the safety of the produced battery cell.

In some embodiments, the free end includes a head end of the electrode sheet; and the connecting the free end of the electrode sheet to the separator includes: connecting the head end of the electrode sheet to the separator. By the fact that the free end of the electrode sheet includes the head end, the head end of the electrode sheet can be connected and fixed to the separator, so as to prevent the head end of the electrode sheet from shift relative to the separator during the forming process of the battery cell.

In some embodiments, while the separator and the electrode sheet are continued to be wound, the method further includes:
Obtaining the wound length of the electrode sheet;
If the wound length of the electrode sheet reaches a predetermined length, cutting the electrode sheet to form a tail end of a first electrode sheet and a head end of a second electrode sheet, where the first electrode sheet is an electrode sheet wound with the separator; and the second electrode sheet is an electrode sheet that is not wound together with the separator; and
Connecting the tail end of the first electrode sheet to the separator.

Through the above arrangement, the tail end of the first electrode sheet formed once the electrode sheet is cut can be connected to the separator, so as to avoid the tail end from shift during the winding process to form the battery cell.

In some embodiments, the free end includes a tail end of the electrode sheet; and the connecting the free end of the electrode sheet to the separator includes: connecting the tail end of the electrode sheet to the separator. Through the above arrangement, the tail end of the electrode sheet as a whole used to form the battery cell can be connected to the separator, to avoid the tail end of the electrode sheet as a whole from separation from the separator.

In some embodiments, the connecting the free end of the electrode sheet to the separator includes: bonding the free end of the electrode sheet to the separator through an adhesive tape. Through the above arrangement, the free end can be connected to the separator through an adhesive tape to meet the requirement of connection of the two.

In some embodiments, the connecting the free end of the electrode sheet to the separator includes: thermally laminating the tail end of the electrode sheet to the separator. Through the above arrangement, the physical properties of the free end of the electrode sheet and the separator can be changed by heating to meet the requirement of connection of the two.

In some embodiments, the connecting the free end of the electrode sheet to the separator includes: press fitting the free end of the electrode sheet to the separator. Through the above arrangement, the physical properties of the free end of the electrode sheet and the separator can be changed by an external force, to meet the requirement of connection of the two.

In some embodiments, before connecting the free end of the electrode sheet to the separator, the method further includes: adjusting the relative position of the free end and the separator. Through the above arrangement, the position of the free end can be adjusted before the free end is connected to the separator, so as to prevent the free end from being connected and fixed to the separator in the event of shift.

In some embodiments, after the free end of the electrode sheet is connected to the separator, the method further includes flattening the connecting region between the free end and the separator. Through the above arrangement, the connection strength between the free end and the separator can be ensured, and the flatness at the connection position of the two can also be ensured.

### Description of Drawings

The features, advantages, and technical effects of the exemplary embodiments of the present application will be described below with reference to the accompanying drawings.
Fig. 1 is a schematic structural diagram of a battery cell manufacturing device according to an embodiment of the present application;
Fig. 2 is a structural diagram showing stacked electrode sheet and separator according to an embodiment of the present application;
Fig. 3 is a schematic structural diagram of a battery cell manufacturing device according to another embodiment of the present application;
Fig. 4 is a schematic structural diagram of an adhesive applying mechanism according to an embodiment of the present application;
Fig. 5 is a schematic structural diagram of an adhesive preparation roller according to an embodiment of the present application;
Fig. 6 is a schematic structural diagram of an adhesive applying mechanism according to another embodiment of the present application;
Fig. 7 is a schematic structural diagram of a supporting mechanism according to an embodiment of the present application;
Fig. 8 is a schematic structural diagram of a supporting mechanism according to another embodiment of the present application;
Fig. 9 is a schematic structural diagram of a battery cell manufacturing device according to another embodiment of the present application;
Fig. 10 is a schematic structural diagram of a flattening component according to an embodiment of the present application;
Fig. 11 is a schematic structural diagram of a battery cell manufacturing device according to another embodiment of the present application;
Figs. 12 to 17 are schematic structural diagrams corresponding to various steps during the process of manufacturing a battery cell by a battery cell manufacturing device according to an embodiment of the present application; and
Fig. 18 is a flow chart of a battery cell manufacturing method according to an embodiment of the present application.

In which:
10-winding pin;
20-lamination assembly;
21-adhesive applying mechanism; 211-first driving portion; 211a-first driving motor; 211b-first lead screw; 211c-first nut; 211d-first guide portion; 212-adhesive preparation roller; 212a-roller body;212b-partition component; 212c-independent chamber; 212d-communicating hole;
22-supporting mechanism; 221-second driving portion; 221a-second driving motor; 221b-second lead screw; 221c-second nut; 221d-second guide portion; 222-supporting roller;
30-flattening component; 31-third driving portion; 32-flattening roller;
40-shift correction component; 50-electrode sheet unwinding mechanism; 60-electrode sheet feeding mechanism; 70-electrode sheet cutting mechanism; 80-electrode sheet pressing roller mechanism; 90-separator unwinding mechanism;
X-length direction; Y-thickness direction;
100-electrode sheet; 100a-anode sheet; 100b-cathode sheet; 110-free end; 110ahead end; 110b-tail end; 200-separator; 300-adhesive tape.

In the drawings, the same components are indicated by the same reference numerals, and the figures are not drawn to actual scale.

### Detailed Description

Embodiments of the technical solutions of the present application will be described in detail below in conjunction with the drawings. The following embodiments are merely provided for more clearly illustrating the technical solutions of the present application, and therefore are exemplary and cannot be construed as limiting the scope of protection of the present application.

Unless otherwise defined, all technical and scientific terms used herein have the same meaning as commonly understood by those skilled in the art belonging to the technical field of the present application. The terms used herein are only for the purpose of describing specific embodiments and are not intended to limit the present application. The terms "including" and "having" and any variations thereof in the specification, claims, and the description of drawings of the present application are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, "a plurality of" means two or more, unless otherwise explicitly and specifically defined.

Reference herein to "an embodiment" means that a particular feature, structure, or characteristic described in connection with the embodiment can be included in at least one embodiment of the present application. The appearance of this phrase anywhere in the specification does not necessarily refer to the same embodiment, or a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that three relationships may exist. For example, A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", and "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation. Therefore, they are not to be interpreted as limitations on the embodiments of the present application.

In the description of the embodiments of the present application, unless otherwise expressly specified and limited, the technical terms "mount", "join", "connect", and "fix", etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

With the rapid development of the battery industry, the production efficiency of battery cells is required to be higher and higher, and the production cost needs to be greatly reduced. The winding method for manufacturing battery cells has the characteristics of high efficiency and low cost, so it is widely used in the production process of battery cells.

The present inventors have noticed that the battery cell formed by winding the electrode sheet and separator has the problem of low safety. The present inventors find through the research and investigation of the structure and processing process of the battery cell itself that during the winding process to produce the battery cell, the free end of the electrode sheet, such as the head end and/or tail end of the electrode sheet, is shifted relative to the separator. After further research and investigation, the present inventors find that during the winding process to form the battery cell, the electrode sheet and the separator are stacked and then wound by a winding pin. There is no tension at the head end of the electrode sheet when fed and at the tail end formed by cutting when the electrode sheet and the separator are wound a predetermined length so that the electrode sheet cannot be tightly attached to the separator. This causes that the angle at the head end of the electrode sheet when fed and/or at the tail end cut upon winding up is unstable. For example, when fed, the head end of the electrode sheet may hit the winding pin, which causes the head portion to be folded, and makes the head end of the electrode sheet shift, affecting the safety performance of the formed battery cell.

To improve the safety performance of the battery cell, the present inventors find through research that the free end of the electrode sheet can be connected to the separator during the manufacturing process of the battery cell, to effectively avoid the problem of low safety of the formed battery cell caused by the shift of the free end of the electrode sheet.

In view of the above problems found by the present inventors, improvements are made by the present inventors on the structure of the battery cell manufacturing device. Embodiments of the present application are further described below.

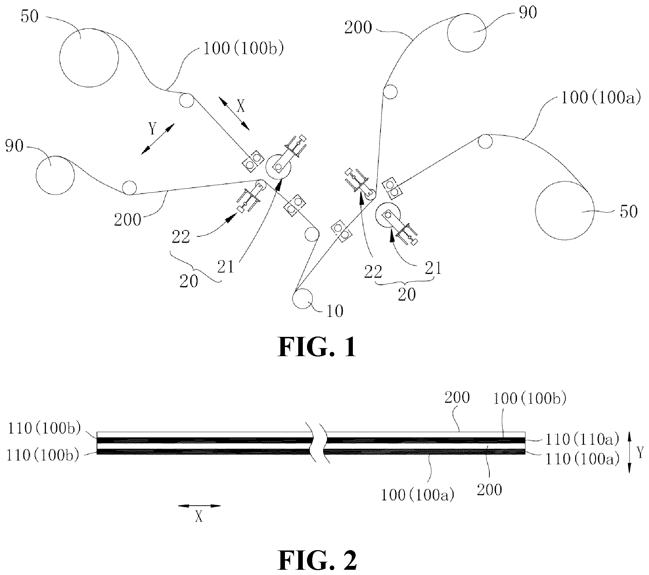

Fig. 1 is a schematic structural diagram of a battery cell manufacturing device according to an embodiment of the present application, and Fig. 2 is a schematic diagram showing stacked electrode sheet and separator according to some embodiments of the present application.

The present application provides a battery cell manufacturing device for manufacturing a battery cell. The battery cell includes an electrode sheet 100 and a separator 200. The electrode sheet 100 has a free end 110 in its own extension direction. The battery cell manufacturing device includes a winding pin 10 and a lamination assembly 20. The winding pin 10 is configured to wind the electrode sheet 100 and separator 200 into a battery cell. The lamination assembly 20 is disposed upstream of the winding pin 10, and configured to connect the free end 110 of the electrode sheet 100 to the separator 200.

As shown in Fig. 2, both the electrode sheet 100 and the separator 200 are strip-shaped. The electrode sheet 100 has a length direction X, a thickness direction Y and a width direction perpendicular to one another. The electrode sheet 100 is stacked on the separator 200 in the thickness direction Y, and the electrode sheet 100 is in contact with the winding pin 10 at an end in the length direction X which is a winding starting end. The free end 110 of the electrode sheet 100 includes a head end 110a and/or a tail end 110b of the electrode sheet 100 in the length direction X.

The electrode sheet 100 may be at least one of an anode sheet 100a and a cathode sheet 100a. The manufactured battery cell may have two electrode sheets. One is the anode sheet 100a and the other is the cathode sheet 100a. Corresponding to the two electrode sheets 100, two separators 200 are provided accordingly, in the thickness direction Y of the electrode sheet 100. One electrode sheet 100 can be sandwiched between the two separators 200, and the other electrode sheet 100 is disposed on a side of one separator 200 facing away from the other separator 200.

When a battery cell is manufactured by the battery cell manufacturing device, the free end 110 of one electrode sheet 100 can be connected to a corresponding separator 200. Of course, the free ends 110 of the two electrode sheets 100 may also be connected to a corresponding separator 200 respectively.

The winding pin 10 is a device that provides a winding surface for the electrode sheet 100 and the separator 200. It has a width corresponding to the width of the wound electrode sheet 100 and separator 200. Depending on the requirements of the process and product structure, the width of the winding pin 10 is greater than or equal to the width of the separator 200. The cross-section of the winding pin 10 in the direction of the winding axis may be circular, diamond-shaped, elliptical or in other shapes, etc, which is not particularly limited in the present application.

The arrangement of the lamination assembly 20 upstream of the winding pin 10 indicates the sequence in the production of the battery cells, and does not limit the spatial positions of the components.

The lamination assembly 20 can connect the free end 110 of the electrode sheet 100 to the separator 200 by providing a connecting element, and of course, the two can also be connected to each other by changing the physical properties of the free end 110 and/or the separator 200.

In the technical solution according to the embodiment of the present application, the lamination assembly 20 is arranged upstream of the winding pin 10, and the free end 110 of the electrode sheet 100 is connected to the separator 200 by the lamination assembly 20, so as to avoid the shift of the free end 110 of the electrode sheet 100 relative to the separator 200 during the winding process of the electrode sheet 100 and the separator 200 of the battery cell, and ensure the safety of the battery cell produced.

According to some embodiments of the present application, optionally, as shown in Fig. 1, the lamination assembly 20 includes an adhesive applying assembly, configured to apply an adhesive to the free end 110 of the electrode sheet 100 and the separator 200, so that the free end 110 of the electrode sheet 100 is adhesively connected to the separator 200.

The adhesive applying assembly is used to adhesively connect the free end 110 of the electrode sheet 100 to the separator 200. The adhesive applying assembly can provide an adhesive to the connecting region between the free end 110 of the electrode sheet 100 and the separator 200. The provided adhesive may be a solid, and of course it can also be a liquid with a certain fluidity, as long as it can meet the requirement of adhesive connection between the free end 110 of the electrode sheet 100 and the separator 200.

By including an adhesive applying assembly in the lamination assembly 20, the free end 110 of the electrode sheet 100 can be made by the adhesive applying assembly to be adhesively connected, to meet the requirement of fixation at relative positions of the free end 110 and the separator 200, and avoid the shift of the free end 110 relative to the separator 200.

According to some embodiments of the present application, optionally, the adhesive applying assembly includes a supporting mechanism 22 and an adhesive applying mechanism 21 arranged oppositely. The supporting mechanism 22 is configured to be arranged on the side of the separator 200 facing away from the electrode sheet 100, and to support the free end 110 and the separator 200 during adhesive application, and the adhesive applying mechanism 21 is configured to be arranged on the side of the separator 200 facing the electrode sheet 100, and to provide an adhesive tape 300 to the free end 110 and the separator 200, so as to adhesively connect the free end 110 and the separator 200 through the adhesive tape 300.

The supporting mechanism 22 and the adhesive applying mechanism 21 are arranged opposite to each other, which means that the two are arranged to at least partially face each other. The adhesive tape 300 provided by the adhesive applying mechanism 21 to the free end 110 and the separator 200 may be a solid. In the width direction of the electrode sheet 100, the width of the adhesive tape 300 is less than or equal to the width of the separator 200. In the length direction X of the electrode sheet 100, the size of the adhesive tape 300 is not particularly limited, as long as it can meet the requirement for connection strength between the free end 110 and the separator 200. The adhesive tape 300 may be partially connected to the free end 110 of the electrode sheet 100 and partially connected to the separator 200.

The supporting mechanism 22 is arranged on the side of the separator 200 facing away from the electrode sheet 100 in the thickness direction Y. When the adhesive applying mechanism 21 provides the adhesive tape 300 to the free end 110 and the separator 200, the supporting mechanism 22 is in contact with the side of the separator 200 facing away from the electrode sheet 100 and provides support to the separator 200 and the free end 110, so that the separator 200 and the free end 110 bear the adhesive tape 300 and are connected by the adhesive tape 300.

By including a supporting mechanism 22 and an adhesive applying mechanism 21 in the adhesive applying assembly, when the free end 110 is intended to be connected to the separator 200, the side of the separator 200 facing away from the electrode sheet 100 is supported by the supporting mechanism 22, and the free end 110 is adhesively connected to the separator 200 by the adhesive tape 300 provided by the adhesive applying mechanism 21, to meet the requirement of fixation at relative positions of the free end 110 and the separator 200, and avoid the shift of the free end 110 relative to the separator 200.

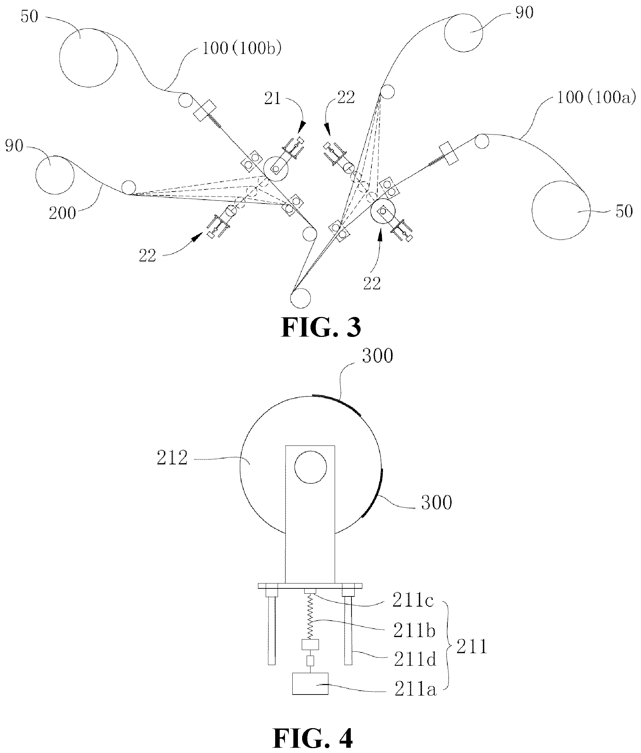

Optionally, Fig. 3 is a schematic structural diagram of a battery cell manufacturing device according to another embodiment of the present application. According to some embodiments of the present application, optionally, as shown in Fig. 3, the distance between the supporting mechanism 22 and the adhesive applying mechanism 21 is adjustable.

The minimum distance between the supporting mechanism 22 and the adhesive applying mechanism 21 in the direction facing each other is adjustable to change the distance between the supporting mechanism 22 and the separator 200, and/or to change the distance from the adhesive applying mechanism 21 to the free end 110 and the separator 200.

Through the above arrangement, the distance between the supporting mechanism 22 and the adhesive applying mechanism 21 can be adjusted according to the winding state of the separator 200 and the electrode sheet 100. When the free end 110 of the electrode sheet 100 needs to be connected to the separator 200, the distance between the supporting mechanism 22 and the adhesive applying mechanism 21 can be adjusted and reduced, such that the supporting mechanism is brought into contact with the separator 200, and the adhesive applying mechanism 21 is brough into contact with the separator 200 and the free end 110 of the electrode sheet 100 to meet the requirement of connection between the free end 110 and the separator 200. When the free end 110 is connected to the separator 200, the distance between the supporting mechanism 22 and the adhesive applying mechanism 21 is adjusted and increased to avoid the contact between the supporting mechanism 22 and the separator 200 and avoid the contact between the adhesive applying mechanism 21 and the electrode sheet 100. This ensures that during the process of winding the separator 200 and the electrode sheet 100 by the winding pin 10, the resistance caused by the supporting mechanism 22 and the adhesive applying mechanism 21 to the movement of the electrode sheet 100 and the separator 200 can be avoided.

Optionally, Fig. 4 is a schematic structural diagram of an adhesive applying mechanism 21 according to an embodiment of the present application. According to some embodiments of the present application, optionally, as shown in Fig. 4, the adhesive applying mechanism 21 includes a first driving portion 211 and an adhesive preparation roller 212 rotatably connected to the first driving portion 211. The first driving portion 211 is configured to drive the adhesive preparation roller 212 to move close to or away from the separator 200 and the free end 110. The adhesive preparation roller 212 is configured to provide a mounting position for the adhesive tape 300, and be driven by the first driving portion 211 to adhesively connect the adhesive tape 300 to the free end 110 and the separator 200.

The adhesive preparation roller 212 can rotate relative to the first driving portion 211. The adhesive preparation roller 212 may be a roller structure with an axis, and can be a round roller, and of course, can also be a polygonal roller. One of the adhesive preparation roller 212 and the first driving portion 211 may be provided with a rotating shaft, and the other is provided with a shaft hole in clearance fit with the rotating shaft to ensure the rotational connection between the two.

The first driving portion 211 can drive the adhesive preparation roller 212 to move, so that the adhesive preparation roller 212 is arranged to move close to or away from the separator 200 and the free end 110. The mounting position on the adhesive preparation roller 212 is an area matching the shape of the adhesive tape 300, so that the adhesive tape 300 can be placed on the adhesive preparation roller 212 and connected with the adhesive preparation roller 212. When the free end 110 of the electrode sheet 100 and the separator 200 is intended to be connected, it can also be in contact with the free end 110 of the electrode sheet 100 and the separator 200.

Through the above arrangement, the first driving portion 211 can drive the adhesive preparation roller 212 to move close to or away from the separator 200 and the electrode sheet 100, so that the distance between the supporting mechanism 22 and the adhesive applying mechanism 21 is adjustable. The adhesive preparation roller 212 has a mounting position for mounting the adhesive tape 300, and the adhesive tape 300 can be mounted at the mounting position. The adhesive preparation roller 212 is rotatably connected to the first driving portion 211, so that after one end of the adhesive tape 300 is bonded to the electrode sheet 100, the adhesive tape 300 is continuously attached to the free end 110 of the electrode sheet 100 and the separator 200 with the rotation of the adhesive preparation roller 212 relative to the first driving portion 211. This meets the requirement of attaching a predetermined length of adhesive tape 300 to the free end 110 and the separator 200 to ensure the connection strength between the free end 110 and the separator 200.

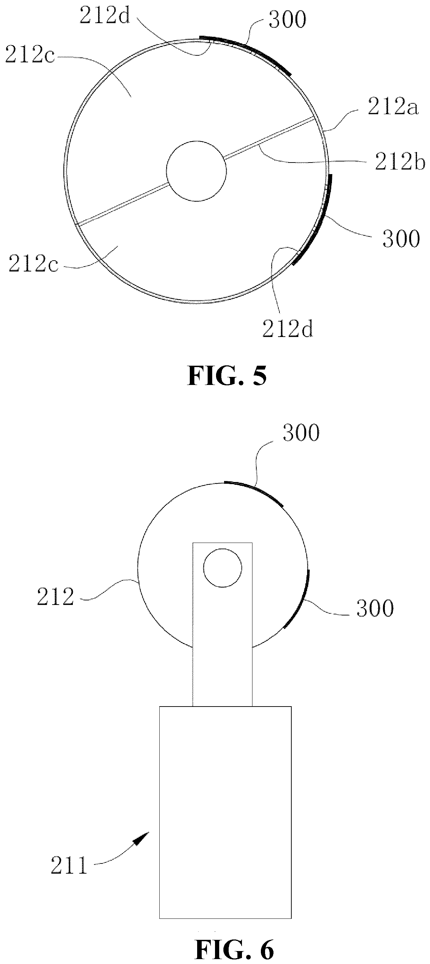

Optionally, Fig. 5 is a schematic structural diagram of an adhesive preparation roller 212 according to an embodiment of the present application. According to some embodiments of the present application, optionally, as shown in Fig. 5, the adhesive preparation roller 212 includes a roller body 212a and a partition component 212b arranged in the roller body 212a. The partition component 212b divides the inner cavity of the roller body 212a into two or more independent chambers 212c, and the roller body 212a is provided with a communicating hole 212d corresponding to each independent chamber 212c, for vacuum suction of the adhesive tape 300.

The roller body 212a is an internal hollow structure, the shape of the partition component 212b is located inside the roller body 212a and the outer wall is connected with the inner wall of the roller body 212a, to divide the hollow cavity inside the roller body 212a into two or more independent chambers 212c, where each two independent chambers 212c are not in communication with each other. The number of independent chambers 212c is not particularly limited, and may be two, and of course may be more than two, such as three, four or even more. The specific number may be defined according to the length of each segment of the adhesive tape 300 and the dimension of the outer diameter of the roller body 212a.

The communicating hole 212d on the roller body 212a runs through the side wall of the roller body 212a and communicates with the corresponding independent chamber 212c, and the number of the communicating hole 212d communicating with each independent chamber 212c is not particularly limited, as long as the strength of the suction force to the adhesive tape 300 can be ensured.

Vacuum suction allows the air pressure inside each independent chamber 212c to be smaller than the air pressure outside the roller body 212a. The existence of the pressure difference causes the external air to tend to enter the independent chamber 212c through the communicating hole 212d. However, because the communicating hole 212d is sealed by the adhesive tape 300, the force applied by the external air will act on the adhesive tape 300 to suck the adhesive tape 300 on the roller body 212a.

The above arrangement facilitates the mounting of the adhesive tape 300. By control of the vacuum level, the pressure in the independent chamber 212c is adjusted to control the suction and release of the adhesive tape 300, so as to meet the requirement of connection of the free end 110 of the electrode sheet 100 and the separator 200 by the adhesive tape 300.

According to some embodiments of the present application, optionally, the first driving portion 211 includes a first driving motor 211a, a first lead screw 211b, a first nut 211c and a first guide portion 211d. The first lead screw 211b is connected to an output end of the first driving motor 211a, the first lead screw 211b is in transmission fit with the first nut 211c, the first nut 211c is in guide fit with the first guide portion 211d, and the first nut 211c is rotatably connected to the adhesive preparation roller 212.

The output end of the first driving motor 211a is connected to the first lead screw 211b to drive the first lead screw 211b to rotate, the first nut 211c is in transmission fit with the first lead screw 211b, and the number of the first guide portion 211d may be one, or of course more than one, for example, two. The two first guide portions 211d are oppositely disposed at both sides of the first lead screw 211b. The first guide portion 211d can prevent the first nut 211c from rotation and provide guidance to the first nut 211c, so that the first nut 211c moves along the extension direction of the first guide portion 211d.

Only the first nut 211 can be rotatably connected to the adhesive preparation roller 212 directly or indirectly. When the indirect connection is adopted, a connecting rod can be provided between the two to ensure the requirement of connection.

Through the above arrangement, the first lead screw 211b can be driven to rotate by the first drive motor 211a. Since the first lead screw 211b is in transmission fit with the first nut 211c, and the first nut 211c is in guide fit with the first guide portion 211d, the rotation of the first lead screw 211b can be converted into the reciprocating movement of the first nut 211c along the length direction of the first lead screw 211b, whereby the first nut 211c can drive the adhesive preparation roller 212 to reciprocate.

Optionally, Fig. 6 is a schematic structural diagram of an adhesive applying mechanism 21 according to another embodiment of the present application. According to some embodiments of the present application, optionally, as shown in Fig. 6, the first driving portion 211 includes a first telescopic cylinder having a cylinder rod rotatably connected to the adhesive preparation roller 212.

The first telescopic cylinder may be a pneumatic cylinder, a hydraulic cylinder or an electric cylinder. The first telescopic cylinder includes a cylinder body and a cylinder rod plugged into the cylinder body and slidably fitting with the cylinder body.

Through the above arrangement, the first driving portion 211 can meet the driving requirements of the adhesive preparation roller 212, and the structure of the first driving portion 211 is simple and the cost is low.

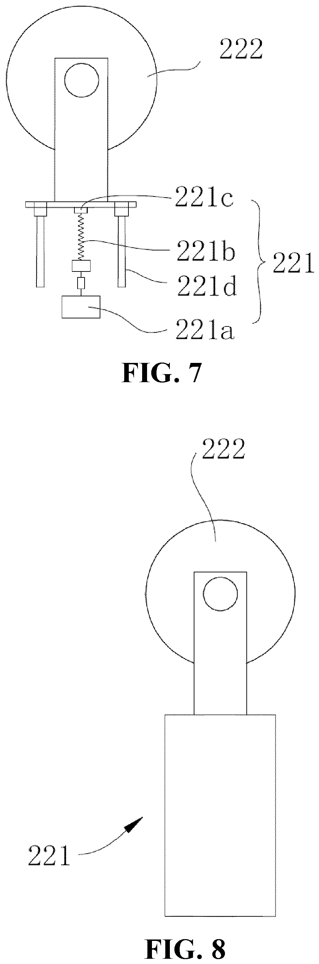

Optionally, Fig. 7 is a schematic structural diagram of a supporting mechanism 22 according to an embodiment of the present application. According to some embodiments of the present application, optionally, as shown in Fig. 7, the supporting mechanism 22 includes a second driving portion 221 and a supporting roller 222 rotatably connected to the second driving portion 221. The second driving portion 221 is configured to drive the supporting roller 222 to move close to or away from the separator 200, and the supporting roller 222 is configured to provide support to the surface on the side of the separator 200 facing away from the electrode sheet 100.

The supporting roller 222 can rotate relative to the second driving portion 221. The supporting roller 222 may be a roller structure with an axis, and can be a round roller, and of course, can also be a polygonal roller. One of the supporting roller 222 and the second driving portion 221 may be provided with a rotating shaft, and the other is provided with a shaft hole in clearance fit with the rotating shaft to ensure the rotational connection between the two.

The second driving portion 221 can drive the supporting roller 222 to move, so that the supporting roller 222 is arranged to move close to or away from the separator 200 and the free end 110. The supporting roller 222 has a support surface intended to contact the surface on the side of the separator 200 facing away from the electrode sheet 100, so as to meet the requirement of supporting the separator 200.

Through the above arrangement, the second driving portion 221 can drive the supporting roller 222 to move in a direction close to or away from the separator 200, so that the distance between the supporting mechanism 22 and the adhesive applying mechanism 21 is adjustable. Moreover, when the separator 200 is supported by the supporting roller 222, the separator 200 runs constantly during the winding by the winding pin 10. By rotatably connecting the supporting roller 222 and the second driving portion 221, when the separator 200 is supported by the supporting roller 222, the friction between them is rolling friction, thus reducing the friction resistance between the supporting roller 222 and the separator 200.

According to some embodiments of the present application, optionally, the second driving portion 221 includes a second driving motor 221a, a second lead screw 221b, a second nut 221c and a second guide portion 221d. The second lead screw 221b is connected to an output end of the second driving motor 221a, the second lead screw 221b is in transmission fit with the second nut 221c, the second nut 221c is in guide fit with the second guide portion 221d, and the second nut 221c is rotatably connected to the supporting roller 222.

The output end of the second driving motor 221a is connected to the second lead screw 221b to drive the second lead screw 221b to rotate, the second nut 221c is in transmission fit with the second lead screw 221b, and the number of the second guide portion 221d may be one, or of course more than one, for example, two. The two second guide portions 221d are oppositely disposed at both sides of the second lead screw 221b. The second guide portion 221d can prevent the second nut 221c from rotation and provide guidance to the second nut 221c, so that the second nut 221c moves along the extension direction of the second guide portion 221d.

Through the above arrangement, the second lead screw 221b can be driven to rotate by the second drive motor 221a. Since the second lead screw 221b is in transmission fit with the second nut 221c, and the second nut 221c is in guide fit with the second guide portion 221d, the rotation of the second lead screw 221b can be converted into the reciprocating movement of the second nut 221c along the length direction X of the second lead screw 221b, whereby the second nut 221c can drive the supporting roller 222 to reciprocate.

Optionally, Fig. 8 is a schematic structural diagram of a supporting mechanism 22 according to another embodiment of the present application. According to some embodiments of the present application, optionally, as shown in Fig. 8, the second driving portion 221 includes a second telescopic cylinder having a cylinder rod rotatably connected to the supporting roller 222.

The second telescopic cylinder may be a pneumatic cylinder, a hydraulic cylinder or an electric cylinder. The second telescopic cylinder includes a cylinder body and a cylinder rod plugged into the cylinder body and slidably fitting with the cylinder body.

Through the above arrangement, the second driving portion 221 can meet the driving requirement of the supporting roller 222, and the structure of the second driving portion 221 is simple and the cost is low.

The lamination assembly 20 is not limited to the structural forms provided in the above-mentioned embodiments. In some embodiments, the lamination assembly 20 may include an infrared heating lamination component configured to heat at least one of the free end 110 and the separator 200, so that the free end 110 is thermally laminated to the separator 200.

Through the above arrangement, the lamination assembly 20 can provide thermal energy to the free end 110 of the electrode sheet 100 and the separator 200 through the infrared heating lamination component, to change the physical properties of the free end 110 of the electrode sheet 100 and the separator 200, so that the two are thermally laminated to meet the requirement of connection.

According to some embodiments of the present application, optionally, the lamination assembly 20 is not limited to the structural forms provided in the above-mentioned embodiments. In some embodiments, the lamination assembly 20 may further include a pressing component configured to compress the free end 110 and the separator 200 such that the free end 110 is in press fit with the separator 200.

Through the above arrangement, the lamination assembly 20 can provide an external force to the free end 110 of the electrode sheet 100 and the separator 200 through the pressing component, to change the physical properties of the free end 110 of the electrode sheet 100 and the separator 200, and meet the requirement of connection of the two.

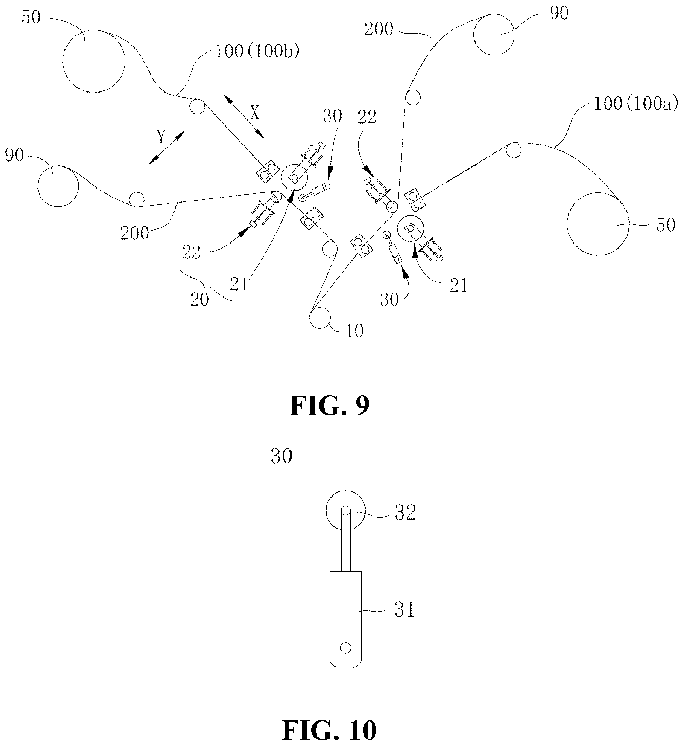

Optionally, Fig. 9 is a schematic structural diagram of a battery cell manufacturing device according to another embodiment of the present application. According to some embodiments of the present application, optionally, as shown in Fig. 9, the battery cell manufacturing device further includes a flattening component 30, which is located downstream of the lamination assembly 20 and upstream of the winding pin 10, and configured to flatten the connecting region between the free end 110 and the separator 200.

The arrangement of the flattening component 30 downstream of the lamination assembly 20 and upstream of the winding pin 10 indicates the sequence in the production of the battery cells, and does not limit the spatial positions of the components.

Flattening refers to pressing against and sweeping across the connecting region between the free end 110 and the separator 200 to avoid wrinkles in the connecting region.

Through the above arrangement, the flattening component 30 can be used to press and flatten the connecting region between the free end 110 of the electrode sheet 100 and the separator 200, so as to ensure the connection strength between the two.

Optionally, Fig. 10 is a schematic structural diagram of a flattening component 30 according to an embodiment of the present application. According to some embodiments of the present application, optionally, as shown in Fig. 10, the flattening component 30 includes a third driving portion 31 and a flattening roller 32 connected to each other. The flattening roller 32 is configured to roll the connecting region between the free end 110 and the separator 200, and the third driving portion 31 is configured to drive the flattening 32 to move in a direction close to or away from the separator 200 and the free end 110.

The flattening roller 32 may be a roller structure with an axis, and may be a round roller. One of the flattening roller 32 and the third driving portion 31 may be provided with a rotating shaft, and the other is provided with a shaft hole in clearance fit with the rotating shaft to ensure the rotational connection between the two. This allows the flattening roller 32 to be in rolling contact with the connecting region when acting on the connecting region.

Through the above arrangement, the flattening roller 32 can be driven by the third driving portion 31 to move in a direction close to or away from the separator 200 and the free end 110 as desired, so as to meet the requirement of flattening the connecting region by the flattening roller 32. After the connecting region is flattened, the flattening roller 32 can be driven by the third driving portion 31 to move in a direction away from the separator 200 and the free end 110, so as to prevent the flattening roller 32 from interfering with the movement of the electrode sheet 100 and the separator 200.

According to some embodiments of the present application, optionally, the third driving portion 31 may include a pneumatic cylinder, a hydraulic cylinder or an electric cylinder. The third driving portion 31 includes a cylinder body and a cylinder rod plugged into the cylinder body and slidably fitting with the cylinder body.

Through the above arrangement, the third driving portion 31 can meet the driving requirements of the supporting roller 222, and the structure of the third driving portion 31 is simple and the cost is low.

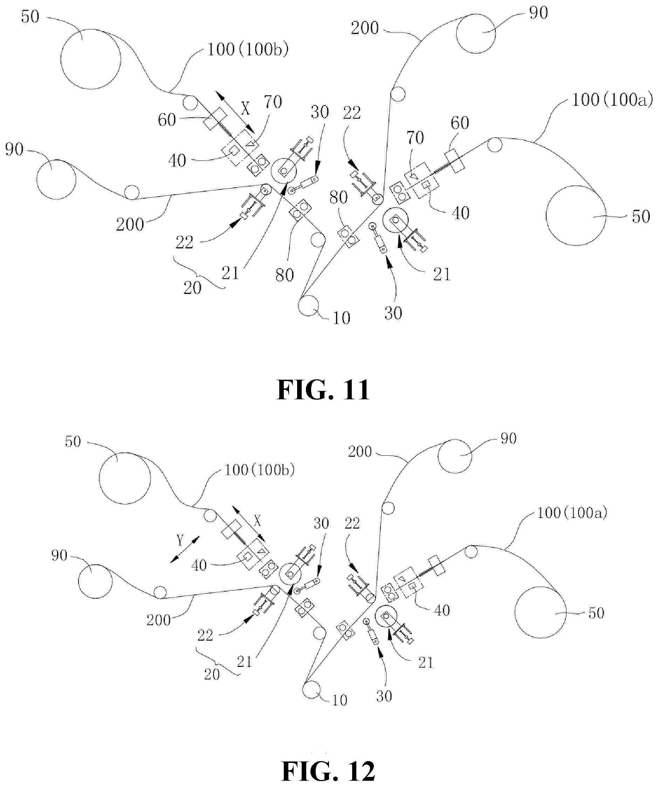

Optionally, Fig. 11 is a schematic structural diagram of a battery cell manufacturing device according to another embodiment of the present application. According to some embodiments of the present application, optionally, as shown in Fig. 11, the battery cell manufacturing device further includes a shift correction component 40 disposed upstream of the lamination assembly 20, and configured to adjust the relative position of the free end 110 and the separator 200.

The arrangement of the shift correction component 40 upstream of the lamination assembly 20 indicates the sequence in the production of the battery cells. The shift correction component 40 is configured to adjust the separator 200 and/or the electrode sheet 100, to change the relative position of them, and prevent the electrode sheet 100 from shifting.

By arranging the shift correction component 40 upstream of the lamination assembly 20, the position of the free end 110 can be adjusted before the lamination assembly 20 connects the free end 110 to the separator 200, so as to prevent the free end 110 from being connected and fixed to the separator 200 in the event of shift.

According to some embodiments of the present application, optionally, the free end 110 includes a head end 110a and/or a tail end 110b of the electrode sheet 100.

The free end 110 may only include the head end 110a of the electrode sheet 100, that is to say, only the head end 110a of the electrode sheet 100 is connected to the separator 200 through the lamination assembly 20. The free end 110 may only include the tail end 110b of the electrode sheet 100, that is to say, only the tail end 110b of the electrode sheet 100 is connected to the separator 200 through the lamination assembly 20. Of course, the head end 110a and the tail end 110b of the electrode sheet 100 may also be connected to corresponding regions of the separator 200 through the lamination assembly 20 respectively.

Through the above arrangement, the head end 110a and/or tail end 110b of the electrode sheet 100 can be connected to the separator 200, thereby avoiding poor alignment of the head end 110a and the tail end 110b of the electrode sheet 100, and improving the safety performance of the formed battery cell.

According to some embodiments of the present application, the present application provides a battery cell manufacturing device. The battery cell formed includes stacked anode sheet 100a, cathode sheet 100b, and two separators 200. Both the anode sheet 100a and the cathode sheet 100b have a free end 110. The free end 110 of the anode sheet 100a includes a head end 110a and a tail end 1 10b, and the free end 110 of the cathode sheet 100b includes a head end 110a and a tail end 110b.

As shown in Fig. 11, the battery cell manufacturing device includes a winding pin 10, a lamination assembly 20, a flattening component 30, a shift correction component 40, an electrode sheet unwinding mechanism 50, an electrode sheet feeding mechanism 60, an electrode sheet cutting mechanism 70, an electrode sheet pressing roller mechanism 80 and an separator unwinding mechanism 90. Each separator 200 corresponds to a separator unwinding mechanism 90, and each electrode sheet 100 is respectively provided with a lamination assembly 20, a flattening component 30, a shift correction component 40, an electrode sheet unwinding mechanism 50, an electrode sheet feeding mechanism 60, an electrode sheet cutting mechanism 80, and an electrode sheet pressing roller mechanism 80. The electrode sheet 100 is wound on the electrode sheet unwinding mechanism 50, and the separator 200 is wound on the separator unwinding mechanism 90.

The lamination assembly 20 corresponding to each electrode sheet 100 can include an adhesive applying assembly, and an adhesive tape 300 can be arranged on an adhesive applying mechanism 21 of the adhesive applying assembly. The adhesive tape 300 on each adhesive applying mechanism 21 includes two segments, which are respectively the adhesive tape 300 used for the head end 110a of the electrode sheet 100 and the adhesive tape 300 used for the tail end 110b of the electrode sheet 100.

When a battery cell is manufactured by the battery cell manufacturing device, the specific process is shown in Figs 12 to 17. Figs. 12 to 17 are schematic structural diagrams corresponding to various steps during the process of manufacturing a battery cell by a battery cell manufacturing device according to an embodiment of the present application.

As shown in Fig. 12, the head end of each separator 200 is connected with the winding pin 10. After the separator 200 of predetermined length is wound by the winding pin 10, each electrode sheet unwinding mechanism 50 starts to release the electrode sheet 100, and the head end 110a of each electrode sheet 100 is corrected by the corresponding shift correction component 40. Then the corresponding electrode sheet 100 is fed by the electrode sheet feeding mechanism 60 to the feeding position respectively.

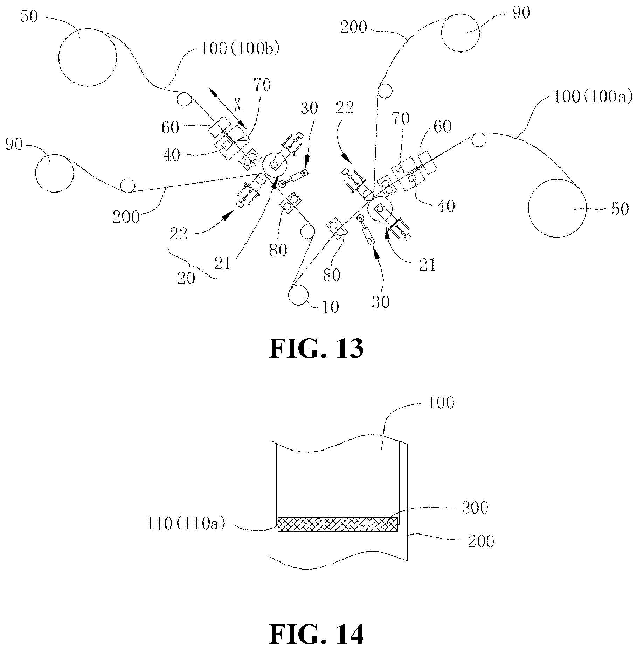

As shown in Fig. 13, the supporting mechanism 22 and the adhesive applying mechanism 21 of the adhesive applying assembly corresponding to each electrode sheet 100 jointly press the head end 110a of the corresponding electrode sheet 100, and the head end 110a of each electrode sheet 100 is connected by the adhesive tape 300 to the separator 200 to form a form shown in Fig. 14.

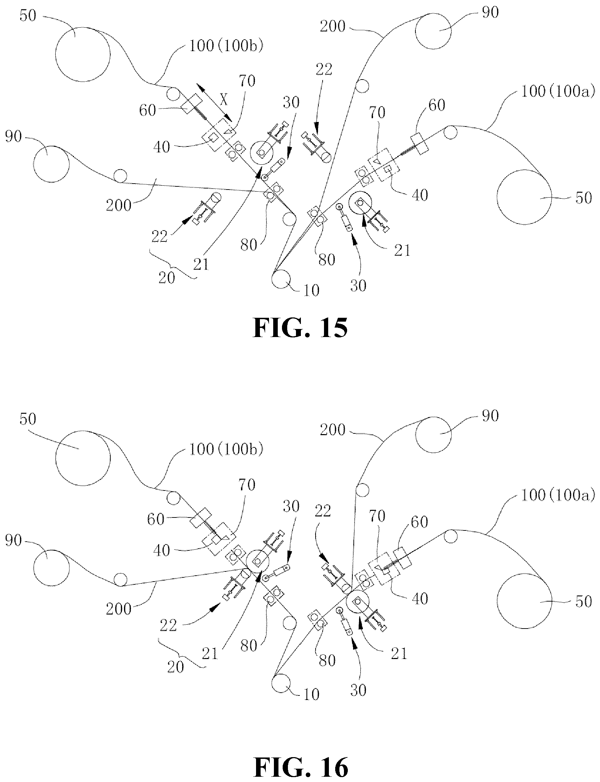

As shown in Fig. 15, after the head end 110a of each electrode sheet 100 is adhered to the corresponding separator 200, the distance between the supporting mechanism 22 and the adhesive applying mechanism 21 of the adhesive applying assembly is adjusted so that the distance between the two is increased. The connecting region between the head end 110a and the separator 200 is flattened by the flattening component 30, so that the head end 110a of the electrode sheet 100 is connected to the separator 200.

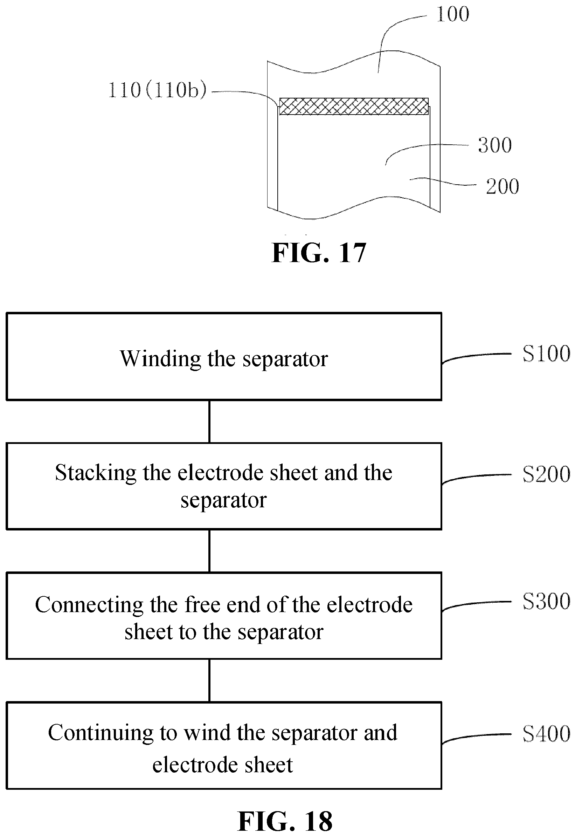

As shown in Fig. 16, the winding pin 10 continues to wind the separator 200 and the electrode sheet 100 until a predetermined length of the electrode sheet 100 and the separator 200 is wound. The electrode sheet 100 is cut by the electrode sheet cutting mechanism 70 to form the tail end 110b of the electrode sheet. Before the electrode sheet 100 is cut, when it is close to the position to be cut, the distance between the supporting mechanism 22 and the adhesive applying mechanism 21 of the adhesive applying assembly, so that the distance between the two decreases. Then the adhesive applying mechanism 21 performs an adhesive application action, and the supporting mechanism 22 and the adhesive applying mechanism 21 combine the electrode sheet 100 and the corresponding separator 200 together. The electrode sheet cutting mechanism 70 cuts off the electrode sheet 100, and then the winding is continued to wind up the tail end, so that the supporting mechanism 22 and the adhesive applying mechanism 21 of the adhesive applying assembly corresponding to each electrode sheet 100 jointly press the tail end 110b of the corresponding electrode sheet 100, and the tail end 110b of each electrode sheet 100 is connected to the separator 200 by the adhesive tape 300. After the tail end 110b of the electrode sheet 100 is connected to the separator 200, the connecting region can be flattened by the flattening component 30, so that the tail end 110b of the electrode sheet 100 and the separator 200 are connected as shown in Fig. 17.

As shown in Fig. 1, Fig. 2 and Fig. 18, Fig. 18 is a flow chart of a battery cell manufacturing method according to an embodiment of the present application. The present application provides a battery cell manufacturing method, where the battery cell includes a separator 200 and an electrode sheet 100 having a free end 110. The method includes:
S100, winding the separator 200;
S200, stacking the electrode sheet 100 on the separator 200;
S300, connecting the free end 110 of the electrode sheet 100 to the separator 200; and
S400, continuing to wind the separator 200 and the electrode sheet 100.

In step S 100, the separator 200 of a predetermined length can be wound first. Specifically, the separator 200 can be wound on a structure such as the winding pin 10 in advance.

In step S200, the electrode sheet 100 is stacked with the separator 200 on its surface in the thickness direction Y. The number of the electrode sheet 100 can be two, one of which is an anode sheet 100, and the other is a cathode sheet 100. The number of the separator 200 depends on the number of the electrode sheet 100. When the number of the electrode sheet 100 is two, the corresponding number of the separator 200 may also be two.

In step S300, the free end 110 and the separator 200 can be connected in various ways, for example, by bonding, infrared heating or an external force to change the physical properties of the free end 110 and/or the separator 200, so that the two are connected to each other.

In step S400, the wound length of the separator 200 and the electrode sheet 100 can be specifically determined according to the performance requirements of the battery cell to be formed, and the length is not particularly limited in the present application.

In the technical solution of the embodiment of the present application, in the process of manufacturing the battery cell, the free end 110 of the electrode sheet 100 is connected to the separator 200, so that the free end 110 of the electrode sheet 100 can be prevented from shift relative to the separator 200 during the process of winding the electrode sheet 100 and the separator 200 intended to be wound into a battery cell, to ensure the safety of the produced battery cell.

According to some embodiments of the present application, optionally, the free end 110 includes the head end 110a of the electrode sheet 100; and step S300 includes connecting the head end 110a of the electrode sheet 100 with the separator 200.

The head end 110a of the electrode sheet 100 is the starting end of the electrode sheet 100 in the length direction X, which is the end of the electrode sheet 100 that is not tensioned in the length direction X. Since the head portion is folded due to the fact that the head end 110a of the electrode sheet 100 hits the winding pin 10 when the electrode sheet 100 is fed, the head end 110a of the electrode sheet 100 is caused to shift, which affects the safety performance of the formed battery cell.

By the fact that the free end 110 of the electrode sheet 100 includes the head end 110a, the head end 110a of the electrode sheet 100 can be connected and fixed to the separator 200, so as to prevent the head end 110a of the electrode sheet 100 from shift relative to the separator 200 during the forming process of the battery cell.

According to some embodiments of the present application, optionally, the battery cell manufacturing method of the present application can be implemented by the battery cell manufacturing device provided in the above embodiments.

According to some embodiments of the present application, optionally, while performing step S400, the manufacturing method further includes obtaining the wound length of the electrode sheet 100; if the wound length of the electrode sheet 100 reaches a predetermined length, cutting the electrode sheet 100 to form a tail end of a first electrode sheet and a head end of a second electrode sheet, where the first electrode sheet is an electrode sheet wound with the separator; and the second electrode sheet is an electrode sheet that is not wound together with the separator; and connecting the tail end of the first electrode sheet to the separator.

The obtained wound length of the electrode sheet 100 is calculated from the head end 110a of the electrode sheet 100. The length of the first electrode sheet can be equal to the length of the anode sheet 100a or the cathode sheet 100b of the battery cell to be formed, and can certainly be less than the length of the anode sheet 100a or the cathode sheet 100b of the battery cell to be formed. When the wound length is less than the length of the anode sheet 100a or the cathode sheet 100b of the battery cell to be formed, multiple first electrode sheets may be included in the formed battery cell, and the head end 110a and the tail end 110b of each first electrode sheet are connected to the corresponding separator 200.

The tail end of the first electrode sheet can be connected by bonding, infrared heating or an external force to change the physical properties of the free end 110 and/or the separator 200, so that the two are connected to each other.

Through the above arrangement, the tail end of the first electrode sheet formed once the electrode sheet 100 is cut can be connected to the separator 200, so as to avoid the tail end from shift during the process of winding to form the battery cell.

According to some embodiments of the present application, optionally, in some embodiments, the free end 110 includes the tail end 110b of the electrode sheet 100; and the connecting the free end 110 of the electrode sheet 100 to the separator 200 includes: connecting the tail end 110b of the electrode sheet 100 to the separator 200. Through the above arrangement, the tail end 110b of the electrode sheet 100 as a whole used to form the battery cell can be connected to the separator 200, to avoid the tail end 110b of the electrode sheet 100 as a whole from separation from the separator 200.

According to some embodiments of the present application, optionally, the free end 110 of the electrode sheet 100 is bonded to the separator 200 through an adhesive tape 300.

The adhesive tape 300 may be a solid. In the width direction of the electrode sheet 100, the width of the adhesive tape 300 is less than or equal to the width of the separator 200. In the length direction X of the electrode sheet 100, the size of the adhesive tape 300 is not particularly limited, as long as it can meet the requirement for connection strength between the free end 110 and the separator 200. The adhesive tape 300 may be partially connected to the free end 110 of the electrode sheet 100 and partially connected to the separator 200.

Through the above arrangement, the free end 110 can be connected to the separator 200 through the adhesive tape 300 to meet the requirement of connection of the two.

According to some embodiments of the present application, optionally, step S300 may further include thermally laminating the free end 110 of the electrode sheet 100 to the separator 200. Through the above arrangement, the free end 110 of the electrode sheet 100 and the separator 200 are thermally laminated. Physical properties of the free end 110 of the electrode sheet 100 and the separator 200 can be changed by heating to meet the requirement of connection of the two.

According to some embodiments of the present application, optionally, before step S300, the method further includes adjusting the relative position of the free end 110 and the separator 200.

By changing the position of at least one of the free end 110 and the separator 200, the relative position between the two is adjusted. Through the above arrangement, the position of the free end 110 can be adjusted before the free end 110 is connected to the separator 200, so as to prevent the free end 110 from being connected and fixed to the separator 200 in the event of shift.

In some embodiments, after the free end 110 of the electrode sheet 100 is connected to the separator 200, the method further includes flattening the connecting region between the free end 110 and the separator 200. Flattening refers to pressing against and sweeping across the connecting region between the free end 110 and the separator 200 by, for example, a flattening component, to avoid wrinkles in the connecting region. Through the above arrangement, the connection strength between the free end 110 and the separator 200 can be ensured, and the flatness at the connection position of the two can also be ensured.

According to some embodiments of the present application, the battery cell manufacturing method provided in the present application includes:
Stacking and winding two separators 200 to a predetermined length; and
Feeding two electrode sheets 100, where one electrode sheet 100 is an anode sheet 100a, and the other electrode sheet 100 is a cathode sheet 100b; and one of the anode sheet 100a and the cathode sheet 100b is stacked between the two separators 200, and the other is stacked on the surface of one separator 200 facing away from the other separator 200.

The head end 110a of each electrode sheet 100 is bonded, thermally laminated or press-fitted to the corresponding separator 200.

The two electrode sheets 100 and two separators 200 are continued to be wound, and during the winding process, the wound length of each electrode sheet 100 is obtained. If the wound length of the electrode sheet 100 reaches a predetermined length, the electrode sheet 100 is cut off to form a tail end of a first electrode sheet and a head end of a second electrode sheet. The tail end 110b of the first electrode sheet is connected to the separator 200 to form a wound battery cell.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various examples can be combined in any manner as long as there is no structural conflict. The present application is not limited to the specific embodiments disclosed herein, but rather includes all technical solutions falling within the scope of the claims.

## Claims

1. A battery cell manufacturing device, the battery cell comprising an electrode sheet and a separator and the electrode sheet having a free end in its own extension direction, wherein the battery cell manufacturing device comprising:
a winding pin, configured to wind the electrode sheet and the separator into a battery cell; and
a lamination assembly, disposed upstream of the winding pin, and configured to connect the free end of the electrode sheet to the separator.

2. The battery cell manufacturing device according to claim 1, wherein the lamination assembly comprises an adhesive applying assembly, configured to apply an adhesive to the free end of the electrode sheet and the separator, so that the free end of the electrode sheet is adhesively connected to the separator.

3. The battery cell manufacturing device according to claim 2, wherein the adhesive applying assembly comprises a supporting mechanism and an adhesive applying mechanism arranged oppositely, wherein the supporting mechanism is configured to be arranged on the side of the separator facing away from the electrode sheet, and to support the free end and the separator during adhesive application, and the adhesive applying mechanism is configured to be arranged on the side of the separator facing the electrode sheet, and to provide an adhesive tape to the free end and the separator, so as to adhesively connect the free end and the separator through the adhesive tape.

4. The battery cell manufacturing device according to claim 3, wherein the distance between the supporting mechanism and the adhesive applying mechanism is adjustable.

5. The battery cell manufacturing device according to claim 3, wherein the adhesive applying mechanism comprises a first driving portion and an adhesive preparation roller rotatably connected to the first driving portion, wherein the first driving portion is configured to drive the adhesive preparation roller to move close to or away from the separator and the free end, and the adhesive preparation roller is configured to provide a mounting position for the adhesive tape, and be driven by the first driving portion to adhesively connect the adhesive tape to the free end and the separator.

6. The battery cell manufacturing device according to claim 5, wherein the adhesive preparation roller comprises a roller body and a partition component arranged in the roller body, wherein the partition component divides the inner cavity of the roller body into two or more independent chambers, and the roller body is provided with a communicating hole corresponding to each independent chamber, for vacuum suction of the adhesive tape.

7. The battery cell manufacturing device according to claim 5, wherein the supporting mechanism comprises a second driving portion and a supporting roller rotatably connected to the second driving portion, wherein the second driving portion is configured to drive the supporting roller to move close to or away from the separator, and the supporting roller is configured to provide support to the surface on the side of the separator facing away from the electrode sheet.

8. The battery cell manufacturing device according to claim 7, wherein the first driving portion includes a first telescopic cylinder having a cylinder rod rotatably connected to the adhesive preparation roller; and/or
the second driving portion comprises a second telescopic cylinder having a cylinder rod rotatably connected to the supporting roller.

9. The battery cell manufacturing device according to claim 7, wherein the first driving portion comprises a first driving motor, a first lead screw, a first nut and a first guide portion, wherein the first lead screw is connected to an output end of the first driving motor, the first lead screw is in transmission fit with the first nut, the first nut is in guide fit with the first guide portion, and the first nut is rotatably connected to the adhesive preparation roller; and/or
the second driving portion comprises a second driving motor, a second lead screw, a second nut and a second guide portion, wherein the second lead screw is connected to an output end of the second driving motor, the second lead screw is in transmission fit with the second nut, the second nut is in guide fit with the second guide portion, and the second nut is rotatably connected to the supporting roller.

10. The battery cell manufacturing device according to claim 1, wherein the lamination assembly comprises an infrared heating lamination component configured to heat at least one of the free end and the separator, such that the free end is thermally laminated with the separator; and/or
the lamination assembly comprises a pressing component configured to compress the free end and the separator such that the free end is in press fit with the separator.

11. The battery cell manufacturing device according to any one of claims 1 to 10, wherein the battery cell manufacturing device further comprising a flattening component, located downstream of the lamination assembly and upstream of the winding pin, and configured to flatten the connecting region between the free end and the separator.

12. The battery cell manufacturing device according to claim 11, wherein the flattening component comprises a third driving portion and a flattening roller connected to each other, wherein the flattening roller is configured to roll the connecting region between the free end and the separator, and the third driving portion is configured to drive the flattening roller to move in a direction close to or away from the separator and the free end.

13. The battery cell manufacturing device according to any one of claims 1 to 10, wherein the battery cell manufacturing device further comprising a shift correction component disposed upstream of the lamination assembly, and configured to adjust the relative position of the free end and the separator.

14. The battery cell manufacturing device according to any one of claims 1 to 10, wherein the free end comprises a head end and/or a tail end of the electrode sheet.

15. A battery cell manufacturing method, the battery cell comprising a separator and an electrode sheet having a free end, wherein the method comprising:
winding the separator;
stacking the electrode sheet and the separator;
connecting the free end of the electrode sheet to the separator; and
continuing to wind the separator and electrode sheet.

16. The battery cell manufacturing method according to claim 15, wherein,
the free end comprises the head end of the electrode sheet; and
the connecting the free end of the electrode sheet to the separator comprises:
connecting the head end of the electrode sheet to the separator.

17. The battery cell manufacturing method according to claim 16, wherein while the separator and the electrode sheet are continued to be wound, the method further comprising:
obtaining the wound length of the electrode sheet;
if the wound length of the electrode sheet reaches a predetermined length, cutting the electrode sheet to form a tail end of a first electrode sheet and a head end of a second electrode sheet, wherein the first electrode sheet is an electrode sheet wound with the separator; and the second electrode sheet is an electrode sheet that is not wound together with the separator; and
connecting the tail end of the first electrode sheet to the separator.

18. The battery cell manufacturing method according to claim 15 or 16, wherein,
the free end comprises the tail end of the electrode sheet; and
the connecting the free end of the electrode sheet to the separator comprises:
connecting the tail end of the first electrode sheet to the separator.

19. The battery cell manufacturing method according to claim 15, wherein,
the connecting the free end of the electrode sheet to the separator comprises:
adhesively connecting the free end of the electrode sheet to the separator through an adhesive tape, or
thermally laminating the free end of the electrode sheet to the separator, or
press fitting the free end of the electrode sheet to the separator.

20. The battery cell manufacturing method according to claim 15, wherein,
before connecting the free end of the electrode sheet to the separator, the method further comprising: adjusting the relative position of the free end and the separator.

21. The battery cell manufacturing method according to claim 14, wherein,
after connecting the free end of the electrode sheet to the separator, the method further comprising: flattening the connecting region between the free end and the separator.
